(19) Europäisches Patentamt

European Patent Office

Office européen des brevets

(11) **EP 3 881 602 B1**

(12) **FASCICULE DE BREVET EUROPEEN**

(45) Date de publication et mention
de la délivrance du brevet:
**21.09.2022 Bulletin 2022/38**

(21) Numéro de dépôt: **19818175.2**

(22) Date de dépôt: **18.12.2019**

(51) Classification Internationale des Brevets (IPC):
**H04W 36/00** *(2009.01)*    *H04W 16/22* *(2009.01)*
*H04W 36/24* *(2009.01)*    *H04W 36/36* *(2009.01)*
*H04W 84/12* *(2009.01)*

(52) Classification Coopérative des Brevets (CPC):
**H04W 36/00837;** H04W 16/22; H04W 36/245;
H04W 36/36; H04W 84/12

(86) Numéro de dépôt international:
**PCT/EP2019/085832**

(87) Numéro de publication internationale:
**WO 2020/127410 (25.06.2020 Gazette 2020/26)**

(54) **PROCÉDÉ ET DISPOSITIF D'ANTICIPATION D'UNE RECONNEXION D'UNE STATION MOBILE**

**VERFAHREN UND VORRICHTUNG ZUR VORHERSAGE EINER WIEDERVERBINDUNG EINER MOBILSTATION**

**METHOD AND DEVICE FOR ANTICIPATING A RECONNECTION OF A MOBILE STATION**

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **20.12.2018 FR 1873544**

(43) Date de publication de la demande:
**22.09.2021 Bulletin 2021/38**

(73) Titulaire: **SAGEMCOM BROADBAND SAS**
**92500 Rueil-Malmaison (FR)**

(72) Inventeur: **REUCHE, Anthony**
**92500 Rueil Malmaison (FR)**

(74) Mandataire: **Cabinet Le Guen Maillet**
**3, impasse de la Vigie**
**CS 71840**
**35418 Saint-Malo Cedex (FR)**

(56) Documents cités:
**KR-A- 20150 094 936**    **US-B1- 7 756 082**

**Description**

DOMAINE TECHNIQUE

La présente invention concerne un procédé et un dispositif d'anticipation d'une reconnexion d'une station mobile connectée à un premier point d'accès vers un second point d'accès.

ETAT DE LA TECHNIQUE ANTERIEURE

Des réseaux de télécommunications sans fils de type WiFi comportent une pluralité de points d'accès pour permettre à une station mobile d'accéder à un réseau de type Internet lorsque la station est connectée à l'un des points d'accès du réseau de télécommunication sans fil.

La connexion de la station mobile à un point d'accès dépend de la position de la station mobile dans le réseau formé par les points d'accès. Si la station mobile se déplace, celle-ci peut s'éloigner du point d'accès auquel la station mobile est connectée et perdre une qualité de service. Elle va devoir se reconnecter à un autre point d'accès.

Les changements de connexion sont appelés transferts intercellulaires ou « Handover » en anglais.

Les changements sont souvent effectués lorsque la station mobile quitte la zone de couverture du point d'accès auquel la station mobile est connectée et entre dans une zone de couverture d'un autre point d'accès.

Ces changements sont souvent effectués à partir de mesures de paramètres de communication et lorsque ceux-ci deviennent trop faibles, un changement de connexion est effectué.

La demande de brevet KR 20150094936 divulgue un système de détermination de transfert capable de prendre en compte des anomalies de performances dans un environnement de réseau local sans fil.

Ceci pénalise bien souvent la qualité de la communication pour la station mobile préalablement au changement de connexion.

EXPOSE DE L'INVENTION

La présente invention a pour but de résoudre les inconvénients de l'art antérieur en proposant un procédé et un dispositif qui permettent d'anticiper une reconnexion d'une station mobile à un point d'accès de manière à éviter une baisse trop importante de la qualité de communication pour la station mobile.

A cette fin, selon un premier aspect, l'invention propose un procédé d'anticipation d'une reconnexion d'une station mobile connectée à un premier point d'accès vers un second point d'accès, les points d'accès formant un réseau de télécommunication sans fil, tel que défini dans la revendication 1.

L'invention concerne aussi un dispositif d'anticipation d'une reconnexion d'une station mobile connectée à un premier point d'accès vers un second point d'accès, les points d'accès formant un réseau de télécommunication sans fil, tel que défini dans la revendication 8. J

Ainsi, la présente invention permet d'anticiper une reconnexion d'une station mobile à un point d'accès de manière à éviter une baisse trop importante de la qualité de communication pour la station mobile.

Selon un mode particulier de l'invention, le procédé comporte en outre une étape de calcul d'un score pour chaque point d'accès et en ce que la détermination si une reconnexion de la station vers le second d'accès doit être est effectuée est déterminée à partir des scores calculés.

Selon un mode particulier de l'invention, les débits physiques entre chaque point d'accès et la station mobile sont les débits physiques reçus par la station mobile.

Selon un mode particulier de l'invention, le premier point d'accès transfère au second point d'accès la modélisation du débit physique entre le premier point d'accès et la station mobile par rapport à la puissance en réception du signal émis par la station mobile et reçu par le premier point d'accès.

Selon un mode particulier de l'invention, la modélisation est obtenue à partir d'une première, seconde et troisième droites affines, le coefficient directeur et l'ordonnée de la seconde droite affine sont déterminés pour chaque station mobile à partir de mesures de débit physiques entre le premier point d'accès et la station mobile par rapport à une puissance en réception d'un signal émis par une station mobile et reçu par le premier point d'accès.

Selon un mode particulier de l'invention, le coefficient directeur est déterminé à partir d'une moyenne de mesures, la moitié des mesures sont supérieures à 50% du débit physique maximum entre le premier point d'accès et la station mobile et inférieures à 80% du débit physique maximum entre le premier point d'accès et la station mobile, l'autre moitié des mesures sont inférieures à 50% du débit physique maximum entre le premier point d'accès et la station mobile et supérieures à 20% du débit physique maximum entre le premier point d'accès et la station mobile.

Selon un mode particulier de l'invention, la modélisation est obtenue en définissant autour des droites affines une zone déterminée à partir d'un pourcentage prédéterminé du débit physique maximum entre le premier point d'accès et la station mobile.

EP 3 881 602 B1

L'invention concerne aussi les programmes d'ordinateur stockés sur un support d'informations, lesdits programmes comportant des instructions permettant de mettre en œuvre les procédés précédemment décrits, lorsqu'ils sont chargés et exécutés par un système informatique.

BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

[Fig. 1] représente un système de télécommunication dans lequel la présente invention est implémentée ;
[Fig. 2] représente un exemple de courbe de variation du débit physique d'un lien entre une station mobile et un point d'accès en fonction de la puissance en réception d'un signal émis par une station mobile et reçu par un point d'accès;
[Fig. 3] représente un exemple des différents niveaux de couverture obtenus à partir de la courbe de variation du débit physique d'un lien entre une station mobile et un point d'accès en fonction de la puissance en réception d'un signal émis par une station mobile et reçu par un point d'accès ;
[Fig. 4] représente un exemple d'architecture d'un point d'accès dans lequel la présente invention est implémentée ;
[Fig. 5] représente un exemple d'algorithme exécuté par un point d'accès selon la présente invention.

EXPOSE DETAILLE DE MODES DE REALISATION

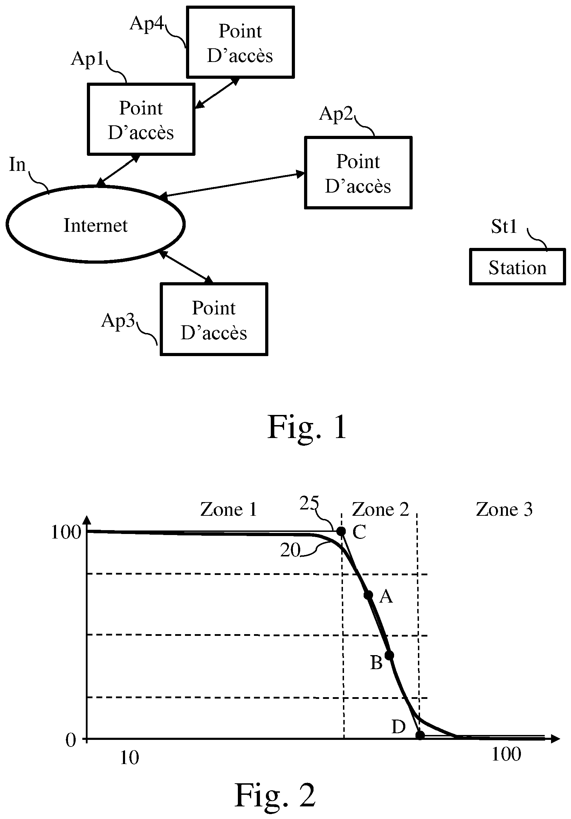

La Fig. 1 représente un système de télécommunication dans lequel la présente invention est implémentée.
Le système comporte une pluralité de points d'accès notés Ap1, Ap2, Ap3 et Ap4 qui permettent, lorsqu'une station mobile St1 est connectée à un point d'accès parmi les points d'accès Ap1, Ap2, Ap3 ou Ap4 d'accéder à un réseau de communication de type internet In via une passerelle résidentielle non représentée en Fig. 1.
Dans l'exemple de la Fig. 1, le point d'accès Ap4 est relié au réseau de communication In par l'intermédiaire du point d'accès Ap1.
La connexion de la station mobile St1 à un point d'accès dépend de la position de la station mobile dans le réseau formé par les points d'accès Ap1, Ap2 et Ap3. Si la station mobile se déplace, celle-ci peut s'éloigner du point accès auquel la station mobile est connectée et perdre une qualité de service. Elle va devoir se reconnecter à un autre point d'accès.
Les performances Wi-Fi sont soumises à plusieurs paramètres liés à l'environnement du point d'accès et de la station mobile St1. Plusieurs types de perturbations peuvent influencer ces paramètres indépendamment les uns des autres. En raison de la complexité des perturbations qui sont souvent cumulatives, il est difficile de prédire la qualité de la liaison physique Wi-Fi pendant une période assez longue pour pouvoir, par exemple, émettre une alerte pertinente concernant une mauvaise qualité de la connexion Wi-Fi et de diriger une station vers un autre point d'accès.
La présente invention utilise les paramètres de communication que sont la mesure de la puissance en réception d'un signal reçu ou RSSi, acronyme de Received Signal Strength Indication et le débit physique entre le point d'accès et la station mobile (Phy-Rate) pour modéliser la liaison entre le point d'accès et la station mobile et caractériser le niveau de performance du débit physique de la liaison en relation avec le niveau d'atténuation entre le point d'accès et la station mobile dans un environnement sans considération de bruit pour prédire une reconnexion de la station mobile à un autre point d'accès.
Dans un mode préféré, le débit physique pris en compte est le débit physique reçu par la station mobile et le RSSI considéré est celui vu par le point d'accès du fait que la modélisation doit être applicable à toutes les stations mobiles.
La présente invention modélise une fonction Phy-Rate = f (RSSI) basée sur le principe que la fonction mathématique est une courbe en forme de S inversé comme cela est représenté en Fig. 2.
La Fig. 2 représente un exemple de courbe de variation du débit physique d'un lien entre une station mobile et un point d'accès en fonction de la puissance en réception d'un signal émis par une station mobile et reçu par un point d'accès.
La courbe en trait gras notée 20 représente la fonction de variation du débit physique d'un lien entre une station mobile et un point d'accès en fonction de la puissance en réception d'un signal émis par une station mobile.
La courbe 20 est selon la présente invention modélisée par la courbe 25 représentée en traits fins.
La courbe 25 est divisée en trois partie notées Zone 1, Zone 2 et Zone 3.
La partie Zone 1 comprend la partie de la courbe 25 pour laquelle le Phy-Rate, représenté en pourcent par rapport au Phi-Rate maximal est proche ou égal au Phi-Rate maximum PhyRatemax. La fonction Phy-Rate = f (RSSI) dans la partie Zone 1 est Phy-Rate = PhyRatemax.
La partie Zone 2 comprend la partie de la courbe 25 pour laquelle le taux de Phy-Rate diminue par rapport à la diminution de RSSI. La partie de la courbe 25 dans la partie Zone 2 est modélisée par une équation de la forme PhyRate = m * | RSSI | + p.

La partie Zone 3 comprend la partie de la courbe 25 pour laquelle le Phy-Rate est proche ou égal à zéro La fonction Phy-Rate = f (RSSI) dans la partie Zone 3 est Phy-Rate = 0.

Concernant la partie de la courbe 25 comprise dans la partie Zone 2, les coefficients m et p doivent être ajustés pour chaque station mobile. En effet, les stations mobiles ont des performances différentes en raison de leur propre jeu de puces radio, d'antennes, de bruits et d'interférences électromagnétiques. A partir d'une courbe initiale, l'ajustement est effectué à l'aide d'échantillons (PhyRate, RSSI) provenant de signaux pilotes.

La courbe initiale dépend du type de station mobile. Par exemple, le coefficient m est égal à -16 et le coefficient p est égal à 1333 pour un Phyrate maximal de 500 Mbps.

Le coefficient m étant lié à la pente, le calcul s'effectue à l'aide de 2 échantillons de (PhyRate, RSSI) notés A et B en Fig. 2 et en effectuant une moyenne sur les dix derniers coefficients m calculés pour réduire l'impact des erreurs de mesures:

[Math 1]

$$m_n = \frac{\frac{PhyRate_A - PhyRate_B}{|RSSI_A| - |RSSI_B|} + \sum_{i=1}^{9} m_{n-i}}{10}$$

Où $m_n$ est le coefficient m d'indice n, $PhyRate_A$ est le PhyRate mesuré au point A, $PhyRate_B$ est le PhyRate mesuré au point B, $RSSI_A$ est le RSSI mesuré au point A et $RSSI_B$ est le RSSI mesuré au point B.

Il est à remarquer ici qu'en cas d'absence de coefficients $m_{n-i}$, ils sont remplacés par la valeur du coefficient m de la courbe initiale.

Pour que le coefficient m se rapproche du cas réel, les échantillons A et B doivent respecter les règles suivantes : Etre centrés sur la partie de la courbe de la zone 2, c'est-à-dire qu'un coefficient doit être situé dans la partie supérieure à 50% du PhyRateMax et que l'autre coefficient doit être situé dans la partie inférieure à 50% du PhyRateMax.

Un échantillon doit être inférieur à 80% de PhyRateMax et l'autre coefficient doit être supérieur à 20% de PhyRatemax.

Les échantillons A et B doivent être suffisamment éloignés pour réduire l'erreur de calcul de la pente.

$$PhyRate_A < PhyRateMax * 80\% \text{ et } PhyRate_A > (PhyRateMax * 50\%)$$

$$PhyRate_B < PhyRateMax * 50\% \text{ et } PhyRate_B > (PhyRateMax * 20\%)$$

$$|RSSI_B| - |RSSI_B| > 5dB.$$

Le coefficient p est calculé avec la formule suivante pour l'échantillon A (PhyRateA, $RSSI_A$)

$$p = PhyRate_A/(m_n * |RSSI_A|)$$

Les points d'intersection des parties de la courbe 25 notés C et D sont calculés de la manière suivante :

$$PhyRate_C = PhyRateMax$$

$$PhyRate_D = 0$$

$$|RSSI_C| = (PhyRateMax - p)/m_n$$

$$|RSSI_D| = p/ m_n$$

Un couple (PhyRate, RSSI) issu d'un échantillonnage réel ne peut pas correspondre exactement au modèle mathématique défini ci-dessus. C'est pourquoi une zone valide est définie autour de cette courbe mathématique pour laquelle les couples (PhyRate, RSSI) sont considérés comme valides.

La zone valide est définie via les paramètres suivants :

$$PhyRateValid = 10\% * PhyRateMax$$

Ainsi un échantillon noté X (PhyRate$_x$, RSSIx) est considéré comme valide si

$$[|PhyRate| = f\ (RSSI_X)] - PhyRateValid \leq PhyRate_X \leq [PhyRate = f(RSSI_X)] + PhyRateValid$$

ou

PhyRatex> PhyRateMax

Dans lequel PhyRate = f(RSSIx) est le PhyRate calculé à partir de la courbe 25.

Dans le cas où il existe un décalage supérieur à 10% entre la courbe initiale et les mesures correspondant à la partie de la courbe 25 située dans la Zone 2, une tolérance dynamique est appliquée sur PhyRateValid pour les sept premiers calculs de l'équation de la zone 2:

Au premier calcul, PhyRateValid = 80% * PhyRateMax
Au second calcul, PhyRateValid = 70% * PhyRateMax
Au troisième calcul, PhyRateValid = 60% * PhyRateMax
Au quatrième calcul, PhyRateValid = 50% * PhyRateMax
Au cinquième calcul, PhyRateValid = 40% * PhyRateMax
Au sixième calcul, PhyRateValid = 30% * PhyRateMax
Au septième calcul, PhyRateValid = 20% * PhyRateMax.

La gestion de la faible couverture de la station mobile est basée sur le modèle PhyRate = f (RSSI). Ce modèle est unique pour chaque station mobile et par bande de fréquence, par exemple 2,4 GHz ou 5 GHz. Pour la reconnexion prédictive, il est considéré que seule une station mobile recevant ou émettant des données est considérée.

Sur la base de cette modélisation, des seuils liés au taux de Phy et au RSSI sont définis pour caractériser les niveaux de couverture compris entre 1 (couverture faible) et 5 (bonne couverture).

$$PhyRateHigh = PhyRateMax$$

$$PhyRateMedium = PhyRateMax * 60\%$$

$$PhyRateLow = PhyRateMax * 20\%$$

$$PhyRateOut = PhyRateMax * 5\%$$

$$|RSSIHigh| = (PhyRateHigh\text{-}p)\ /\ m$$

$$|RSSIMedium| = (PhyRateMedium\text{-}p)\ /\ m$$

$$|RSSILow| = (PhyRateLow\text{-}p)\ /\ m$$

$$|RSSIOut| = (PhyRateOut\text{-}p)\ /\ m$$

Les règles permettant de définir les niveaux de couverture sont les suivantes :

Niveau 5 PhyRate≥PhyRateMedium et | RSSI | ≤RSSIHigh
Niveau 4 PhyRate≥PhyRateMedium et RSSI> RSSIHigh et RSSI≤RSSIMedium
Niveau 3 (PhyRate≥PhyRateLow et RSSI> RSSIMedium et RSSI≤RSSILow) ou (PhyRate≥PhyRateLow et PhyRate <PhyRateMedium et RSSI<RSSIMedium)
Niveau 2 (PhyRate>PhyRateOut et RSSI> RSSILow et RSSI≤RSSIOut) ou (PhyRate≥PhyRateOut et PhyRate <PhyRateLow et RSSI≤RSSILow)
Niveau 1 PhyRate <PhyRateOut ou | RSSI |> RSSIOut.

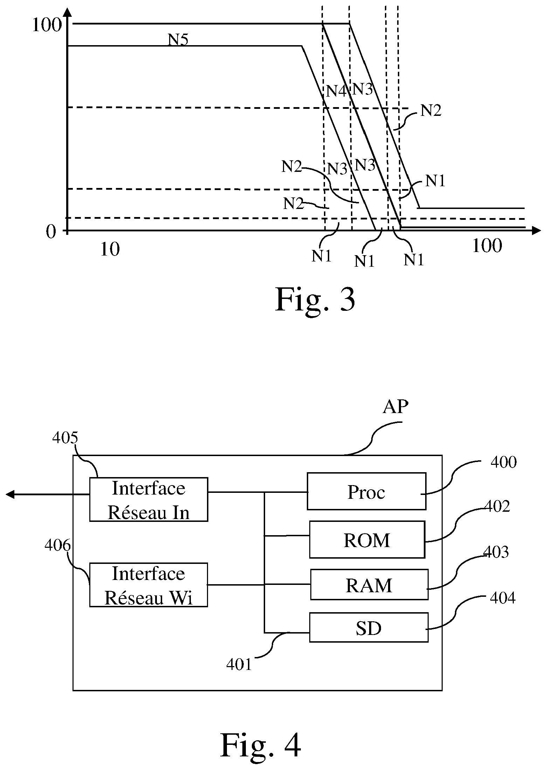

Un exemple des différents niveaux est donné en référence à la Fig. 3.
La Fig. 3 représente un exemple des différents niveaux de couverture obtenus à partir de la courbe de variation du débit physique d'un lien entre une station mobile et un point d'accès en fonction de la puissance en réception d'un signal émis par une station mobile et reçu par un point d'accès.
Dans la Fig. 3, le niveau 1 est noté N1, le niveau 2 est noté N2, le niveau 3 et noté N4 et le niveau 5 est noté N5.
Le mécanisme de reconnexion à un autre point d'accès repose sur l'anticipation de la valeur future du couple (RSSI, PhyRate) pour les 10 prochaines secondes. S'il est considéré que ce couple se trouvera dans une zone de faible couverture, un transfert ou reconnexion vers un autre point d'accès est initié. Ce transfert nécessite une sélection du point d'accès sur lequel la station mobile sera dirigée. Pour déterminer ce point d'accès, un pré-transfert est effectué en anticipant les performances de la station mobile sur le futur point d'accès.
L'objectif du pré-transfert est de déterminer le meilleur point d'accès sur lequel la station mobile pourrait être dirigée.
Si la zone de couverture actuelle est inférieure au niveau 4, une surveillance de la station mobile est alors lancée par le point d'accès sur le système Wi-Fi complet. Chaque point d'accès auquel la station mobile n'est pas connectée, effectue des mesures pour la station mobile et transmet toutes les 10 secondes les informations suivantes au point d'accès auquel la station mobile est connectée.
Les mesures sont la mesure du RSSI.
La valeur du RSSI est la valeur moyenne de 5 échantillons collectés toutes les 2 secondes et qui appartiennent à la zone valide, la valeur du RSSI est donné par :

[Math 2]

$$RSSI_n = \frac{\sum_{i=1}^{5} |RSSI_i|}{5}$$

Une valeur $v_{RSSI}$ représentative de la vitesse d'évolution du RSSI est l'image de son évolution par seconde et elle est basée sur la vitesse moyenne des 5 échantillons collectés toutes les 2 secondes et qui appartiennent à la zone valide, la valeur $v_{RSSI}$ est donné par :

[Math 3]

$$v_{RSSI_n} = \frac{\sum_{i=1}^{5} |RSSI_i| - |RSSI_{i-1}|}{10}$$

Sur la base de ces informations, le point d'accès auquel la station mobile est connectée calcule, pour chaque point d'accès, y compris lui-même, une prédiction de la valeur du RSSI et une prédiction de la valeur $v_{RSSI}$.
Le calcul est effectué toutes les 10 secondes avec les échantillons (RSSI, PhyRate) collectés pour le calcul de la valeur de $RSSI_n$ et $v_{RSSI_n}$ selon les formules suivantes :

$$PhyRate_{n+1} = f(|RSSI_{n+1}|)$$

Pour

$$|RSSI_{n+1}| = (|RSSI_n|) + v_{RSSI_n} * t$$

Où t=10s

Pour choisir le meilleur point d'accès, un score de performance est calculé pour la dernière minute écoulée et la prédiction selon la formule suivante :

[Math 4]

$$HandoverScore = \frac{\sum_{n=-5}^{0} RSSI_n + RSSI_{n+1}}{7}$$

Si une reconnexion à un autre point d'accès est effectuée, une temporisation de 5 minutes est déclenchée pendant laquelle aucune reconnexion ne pourra être effectuée sauf si le niveau de couverture est inférieur à 3.

La Fig. 4 représente un exemple d'architecture d'un point d'accès dans lequel la présente invention est implémentée.

Le point d'accès AP comprend :

- un processeur, micro-processeur, ou microcontrôleur 400 ;
- une mémoire volatile 403 ;
- une mémoire non volatile 402 ;
- éventuellement, un lecteur 404 de médium de stockage, tel qu'un lecteur de carte SD (*Secure Digital Card* en anglais ou *Carte Numérique Sécurisée* en français) ou un disque dur pour mémoriser les documents traités par la présente invention ;
- une interface réseau 405 permettant de communiquer avec le réseau In,
- une interface réseau WiFi 406,
- un bus de communication 401 reliant le processeur 400 à la mémoire ROM 403, à la mémoire RAM 403, au lecteur de médium de stockage 404 et aux interfaces réseau 205 et 206.

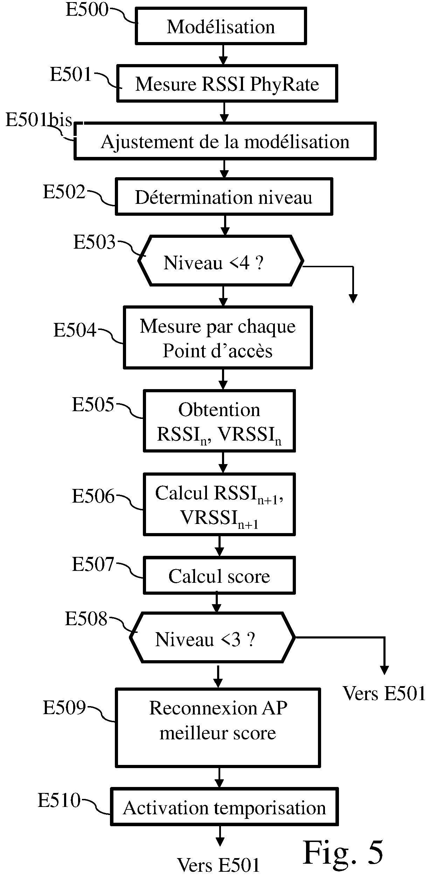

Le processeur 400 est capable d'exécuter des instructions chargées dans la mémoire volatile 203 à partir de la mémoire non volatile 402, d'une mémoire externe (non représentée), d'un support de stockage, tel qu'une carte SD ou autre, ou d'un réseau de communication. Lorsque le point d'accès AP est mis sous tension, le processeur 400 est capable de lire de la mémoire volatile 403 des instructions et de les exécuter. Ces instructions forment un programme d'ordinateur qui cause la mise en œuvre, par le processeur 400, de tout ou partie du procédé décrit en relation avec la Fig. 5.

Tout ou partie du procédé décrit en relation avec la Fig. 5 peut être implémenté sous forme logicielle par exécution d'un ensemble d'instructions par une machine programmable, telle qu'un DSP (*Digital Signal Processor* en anglais ou *Unité de Traitement de Signal Numérique* en français) ou un microcontrôleur ou être implémenté sous forme matérielle par une machine ou un composant dédié, tel qu'un FPGA (*Field-Programmable Gate Array* en anglais ou *Matrice de Portes Programmable sur le Terrain* en français) ou un ASIC (*Application-Specifie Integrated Circuit* en anglais ou *Circuit Intégré Spécifique à une Application* en français).

La Fig. 5 représente un exemple d'algorithme exécuté par un point d'accès selon la présente invention.

Le présent algorithme est décrit dans un exemple dans lequel il est exécuté par le processeur 400.

A l'étape E500, le processeur 400 effectue une modélisation du débit physique entre le premier point d'accès et la station mobile par rapport à la puissance en réception d'un signal émis par une station mobile et reçu par le premier point d'accès à partir de mesures de puissance en réception de signaux émis par la station mobile et reçus par le premier point d'accès.

Les débits physiques entre chaque point d'accès et la station mobile sont les débits physiques reçus par la station mobile.

La modélisation est obtenue à partir d'une première, seconde et troisième droites affines, le coefficient directeur et l'ordonnée de la seconde droite affine sont déterminés pour chaque station mobile à partir de mesures de débit physiques entre le premier point d'accès et la station mobile par rapport à une puissance en réception d'un signal émis par une station mobile et reçu par le premier point d'accès.

Le coefficient directeur est déterminé à partir d'une moyenne de mesures, la moitié des mesures sont supérieures à 50% du débit physique maximum entre le premier point d'accès et la station mobile et inférieures à 80% du débit physique maximum entre le premier point d'accès et la station mobile, l'autre moitié des mesures sont inférieures à 50% du débit physique maximum entre le premier point d'accès et la station mobile et supérieures à 20% du débit physique maximum entre le premier point d'accès et la station mobile.

La modélisation est obtenue en définissant autour des droites affines une zone déterminée à partir d'un pourcentage prédéterminé du débit physique maximum entre le premier point d'accès et la station mobile.

A cette même étape, le processeur 400 définit des niveaux de couverture comme cela est décrit en référence à la Fig. 2.

A cette même étape, le processeur 400 transfère éventuellement aux autres points d'accès la modélisation du débit physique entre le premier point d'accès et la station mobile par rapport à la puissance en réception du signal émis par la station mobile et reçu par le point d'accès.

A l'étape E501, le processeur 400 commande l'interface Wi-Fi 406 pour que des mesures de débits physiques entre le premier point d'accès et la station mobile ainsi que des mesures de puissances en réception de signaux émis par la station mobile et reçus par le premier point d'accès soient effectuées.

A l'étape E501bis, le processeur 400 effectue éventuellement un ajustement de la modélisation telle que décrite en référence à la Fig. 2 en utilisant les mesures de débits physiques entre le premier point d'accès et la station mobile ainsi que les mesures de puissances en réception de signaux émis par la station mobile et reçus par le premier point d'accès obtenues à l'étape E501.

A l'étape E502, le processeur 400 détermine le niveau dans lequel se trouve la station mobile à partir des mesures comme cela est décrit en référence à la Fig. 2.

A l'étape E503, le processeur 400 vérifie si le niveau déterminé à l'étape E502 est inférieur au niveau 4.

Dans l'affirmative, le processeur 400 passe à l'étape E503. Dans la négative, le processeur 400 interrompt le présent algorithme.

A l'étape E504, le processeur 400 commande chaque point d'accès pour effectuer des mesures comme cela est décrit en référence à la Fig. 2.

A l'étape E505, le processeur 400 obtient des mesures de puissance en réception de signaux émis par la station mobile et reçus par chaque point d'accès comme cela est décrit en référence à la Fig. 2 et calcule les débits physiques entre chaque point d'accès et la station mobile et la vitesse de variation des débits physiques entre chaque point d'accès et la station mobile à partir des mesures obtenues et de la modélisation comme cela est décrit en référence à la Fig. 2.

A l'étape E506, le processeur 400 fait un calcul d'anticipations d'un débit physique entre chaque point d'accès et la station mobile comme cela est décrit en référence à la Fig. 2.

A l'étape E507, le processeur 400 calcule un score pour chaque point d'accès comme cela est décrit en référence à la Fig. 2.

A l'étape E508, le processeur 400 vérifie si le niveau déterminé à l'étape E502 est inférieur au niveau 3.

Dans l'affirmative, le processeur 400 passe à l'étape E509. Dans la négative, le processeur 400 retourne à l'étape E501.

A l'étape E509, le processeur 400 détermine qu'une reconnexion de la station mobile vers le second point d'accès doit être effectuée à partir des scores calculés comme cela est décrit en référence à la Fig. 2.

A l'étape E510, le processeur 400 active la temporisation de 5 minutes pendant laquelle aucune reconnexion ne pourra être effectuée sauf si le niveau de couverture est inférieur à 3.

## Revendications

1. Procédé d'anticipation d'une reconnexion d'une station mobile connectée à un premier point d'accès vers un second point d'accès, les points d'accès formant un réseau de télécommunication sans fil **caractérisé en ce que** le procédé comporte les étapes, exécutées par le premier point d'accès de :

    - modélisation d'un débit physique entre le premier point d'accès et la station mobile par rapport à une puissance en réception d'un signal émis par une station mobile et reçu par le premier point d'accès à partir de mesures de puissance en réception de signaux émis par la station mobile et reçus par le premier point d'accès,
    - détermination de niveaux à partir de la modélisation, les niveaux étant définis à partir du débit physique entre le premier point d'accès et la station mobile et la puissance en réception d'un signal émis par une station mobile et reçu par le premier point d'accès,
    - mesures de débits physiques entre le premier point d'accès et la station mobile,
    - mesures de puissances en réception de signaux émis par la station mobile et reçus par le premier point d'accès,
    - détermination d'un niveau dans lequel se trouve la station mobile à partir des mesures,
    - vérification si le niveau dans lequel se trouve la station mobile est inférieur à un des niveaux déterminés à partir de la modélisation et, dans l'affirmative, le procédé comporte en outre les étapes de :
    - obtention de mesures de puissance en réception de signaux émis par la station mobile et reçus par le premier et le second points d'accès,
    - calcul d'une valeur de la puissance en réception d'un signal émis par la station mobile et reçu par le premier point d'accès et d'une vitesse de variation de la puissance en réception d'un signal émis par la station mobile et reçu par le premier point d'accès à partir des mesures obtenues et de la modélisation,
    - calcul, à partir de la valeur de la puissance en réception d'un signal émis par la station mobile et reçu par le premier point d'accès et de la vitesse de variation de la puissance en réception d'un signal émis par la station mobile et reçu par le premier point d'accès calculés, d'anticipations d'un débit physique entre chaque point d'accès et la station mobile,
- détermination si une reconnexion de la station vers le second d'accès doit être effectuée entre autres à partir des anticipations calculées.

2. Procédé selon la revendication 1, **caractérisé en ce que** le procédé comporte en outre une étape de calcul d'un score pour chaque point d'accès et **en ce que** la détermination si une reconnexion de la station vers le second d'accès doit être est effectuée est déterminée à partir des scores calculés.

3. Procédé selon la revendication 1 ou 2, **caractérisé en ce que** les débits physiques entre chaque point d'accès et la station mobile sont les débits physiques reçus par la station mobile.

4. Procédé selon l'une quelconque des revendications 1 à 3, **caractérisé en ce que** le procédé comporte en outre une étape de transfert de la modélisation du débit physique entre le premier point d'accès et la station mobile par rapport à la puissance en réception du signal émis par la station mobile et reçu par le premier point d'accès au second point d'accès.

5. Procédé selon l'une quelconque des revendications 1 à 4, **caractérisé en ce que** la modélisation est obtenue à partir d'une première, seconde et troisième droites affines, le coefficient directeur et l'ordonnée de la seconde droite affine sont déterminés pour chaque station mobile à partir de mesures de débit physiques entre le premier point d'accès et la station mobile par rapport à une puissance en réception d'un signal émis par une station mobile et reçu par le premier point d'accès.

6. Procédé selon la revendication 5, **caractérisé en ce que** le coefficient directeur est déterminé à partir d'une moyenne de mesures, la moitié des mesures sont supérieures à 50% du débit physique maximum entre le premier point d'accès et la station mobile et inférieures à 80% du débit physique maximum entre le premier point d'accès et la station mobile, l'autre moitié des mesures sont inférieures à 50% du débit physique maximum entre le premier point d'accès et la station mobile et supérieures à 20% du débit physique maximum entre le premier point d'accès et la station mobile.

7. Procédé selon la revendication 6, **caractérisé en ce que** la modélisation est obtenue en définissant autour des droites affines une zone déterminée à partir d'un pourcentage prédéterminé du débit physique maximum entre le premier point d'accès et la station mobile.

8. Dispositif d'anticipation d'une reconnexion d'une station mobile connectée à un premier point d'accès vers un second point d'accès, les points d'accès formant un réseau de télécommunication sans fil **caractérisé en ce que** le dispositif est compris dans le premier point d'accès et comporte :

   - des moyens de modélisation d'un débit physique entre le premier point d'accès et la station mobile par rapport à une puissance en réception d'un signal émis par une station mobile et reçu par le premier point d'accès à partir de mesures de puissance en réception de signaux émis par la station mobile et reçus par le premier point d'accès,
   - des moyens de détermination de niveaux à partir de la modélisation, les niveaux étant définis à partir du débit physique entre le premier point d'accès et la station mobile et la puissance en réception d'un signal émis par une station mobile et reçu par le premier point d'accès,
   - des moyens de mesures de débits physiques entre le premier point d'accès et la station mobile,
   - des moyens de mesures de puissances en réception de signaux émis par la station mobile et reçus par le premier point d'accès,
   - des moyens de détermination d'un niveau dans lequel se trouve la station mobile à partir des mesures,
   - des moyens de vérification si le niveau dans lequel se trouve la station mobile est inférieur à un des niveaux déterminés à partir de la modélisation et, dans l'affirmative, des moyens d'activation de :
   - des moyens d'obtention de mesures de puissance en réception de signaux émis par la station mobile et reçus par le premier et le second points d'accès,
   - des moyens de calcul d'une valeur de la puissance en réception d'un signal émis par la station mobile et reçu par le premier point d'accès et d'une vitesse de variation de la puissance en réception d'un signal émis par la station mobile et reçu par le premier point d'accès à partir des mesures obtenues et de la modélisation,
   - des moyens de calcul, à partir de la valeur de la puissance en réception d'un signal émis par la station mobile et reçu par le premier point d'accès et de la vitesse de variation de la puissance en réception d'un signal émis par la station mobile et reçu par le premier point d'accès calculés, d'anticipations d'un débit physique entre chaque point d'accès et la station mobile,
- des moyens de détermination si une reconnexion de la station vers le second d'accès doit être effectuée entre autres à partir des anticipations calculées.

9.  Programme d'ordinateur stocké sur un support d'informations, ledit programme comportant des instructions permettant de mettre en œuvre le procédé selon l'une quelconque des revendications 1 à 7, lorsqu'il est chargé et exécuté par un système informatique.

10. Moyens de stockage **caractérisés en ce qu'**ils stockent un programme d'ordinateur comprenant des instructions pour mettre en œuvre, par un dispositif, le procédé selon l'une quelconque des revendications 1 à 7, lorsque ledit programme est exécuté par un processeur dudit dispositif.


**Patentansprüche**

1.  Verfahren zum Antizipieren einer Neuverbindung einer mit einem ersten Zugangspunkt verbundenen Mobilstation zu einem zweiten Zugangspunkt, wobei die Zugangspunkte ein drahtloses Telekommunikationsnetz bilden, **dadurch gekennzeichnet, dass** das Verfahren die folgenden vom ersten Zugangspunkt ausgeführten Schritte aufweist:

    - Modellierung eines physikalischen Durchsatzes zwischen dem ersten Zugangspunkt und der Mobilstation bezüglich einer Empfangsleistung eines von einer Mobilstation gesendeten und vom ersten Zugangspunkt empfangenen Signals ausgehend von Empfangsleistungsmessungen von von der Mobilstation gesendeten und vom ersten Zugangspunkt empfangenen Signalen,
    - Bestimmung von Pegeln ausgehend von der Modellierung, wobei die Pegel ausgehend vom physikalischen Durchsatz zwischen dem ersten Zugangspunkt und der Mobilstation und von der Empfangsleistung eines von einer Mobilstation gesendeten und vom ersten Zugangspunkt empfangenen Signals definiert werden,
    - Messungen physikalischer Durchsätze zwischen dem ersten Zugangspunkt und der Mobilstation,
    - Messungen von Empfangsleistungen von von der Mobilstation gesendeten und vom ersten Zugangspunkt empfangenen Signalen,
    - Bestimmung eines Pegels, auf dem sich die Mobilstation befindet, ausgehend von den Messungen,
    - Überprüfung, ob der Pegel, auf dem sich die Mobilstation befindet, niedriger ist als einer der ausgehend von der Modellierung bestimmten Pegel, und wenn ja, weist das Verfahren außerdem die folgenden Schritte auf:
    - Erhalt von Empfangsleistungsmessungen von von der Mobilstation gesendeten und vom ersten und vom zweiten Zugangspunkt empfangenen Signalen,
    - Berechnung eines Werts der Empfangsleistung eines von der Mobilstation gesendeten und vom ersten Zugangspunkt empfangenen Signals und einer Änderungsgeschwindigkeit der Empfangsleistung eines von der Mobilstation gesendeten und vom ersten Zugangspunkt empfangenen Signals ausgehend von den erhaltenen Messungen und der Modellierung,
    - Berechnung, ausgehend vom berechneten Wert der Empfangsleistung eines von der Mobilstation gesendeten und vom ersten Zugangspunkt empfangenen Signals und der Änderungsgeschwindigkeit der Empfangsleistung eines von der Mobilstation gesendeten und vom ersten Zugangspunkt empfangenen Signals, von Antizipationen eines physikalischen Durchsatzes zwischen jedem Zugangspunkt und der Mobilstation,
    - Bestimmung, ob eine Neuverbindung der Station zum zweiten Zugangspunkt unter anderen ausgehend von den berechneten Antizipationen ausgeführt werden muss.

2.  Verfahren nach Anspruch 1, **dadurch gekennzeichnet, dass** das Verfahren außerdem einen Schritt der Berechnung eines Scores für jeden Zugangspunkt aufweist, und dass die Bestimmung, ob eine Neuverbindung der Station mit dem zweiten Zugangspunkt ausgeführt werden muss, ausgehend von den berechneten Scores bestimmt wird.

3.  Verfahren nach Anspruch 1 oder 2, **dadurch gekennzeichnet, dass** die physikalischen Durchsätze zwischen jedem Zugangspunkt und der Mobilstation die von der Mobilstation empfangenen physikalischen Durchsätze sind.

4.  Verfahren nach einem der Ansprüche 1 bis 3, **dadurch gekennzeichnet, dass** das Verfahren außerdem einen Schritt der Übertragung der Modellierung des physikalischen Durchsatzes zwischen dem ersten Zugangspunkt und der Mobilstation bezüglich der Empfangsleistung des von der Mobilstation gesendeten und vom ersten Zugangspunkt empfangenen Signals zum zweiten Zugangspunkt aufweist.

5. Verfahren nach einem der Ansprüche 1 bis 4, **dadurch gekennzeichnet, dass** die Modellierung ausgehend von einer ersten, zweiten und dritten affinen Geraden erhalten wird, wobei der Richtkoeffizient und die Ordinate der zweiten affinen Geraden für jede Mobilstation ausgehend von Messungen physikalischer Durchsätze zwischen dem ersten Zugangspunkt und der Mobilstation bezüglich einer Empfangsleistung eines von einer Mobilstation gesendeten und vom ersten Zugangspunkt empfangenen Signals bestimmt werden.

6. Verfahren nach Anspruch 5, **dadurch gekennzeichnet, dass** der Richtkoeffizient ausgehend von einem Messungsmittelwert bestimmt wird, wobei die Hälfte der Messungen höher als 50% des maximalen physikalischen Durchsatzes zwischen dem ersten Zugangspunkt und der Mobilstation und niedriger als 80% des maximalen physikalischen Durchsatzes zwischen dem ersten Zugangspunkt und der Mobilstation sind, die andere Hälfte der Messungen niedriger als 50% des maximalen physikalischen Durchsatzes zwischen dem ersten Zugangspunkt und der Mobilstation und höher als 20% des maximalen physikalischen Durchsatzes zwischen dem ersten Zugangspunkt und der Mobilstation sind.

7. Verfahren nach Anspruch 6, **dadurch gekennzeichnet, dass** die Modellierung erhalten wird, indem um die affinen Geraden herum eine ausgehend von einem vorbestimmten Prozentsatz des maximalen physikalischen Durchsatzes zwischen dem ersten Zugangspunkt und der Mobilstation bestimmte Zone definiert wird.

8. Vorrichtung zum Antizipieren einer Neuverbindung einer mit einem ersten Zugangspunkt verbundenen Mobilstation zu einem zweiten Zugangspunkt, wobei die Zugangspunkte ein drahtloses Telekommunikationsnetz bilden, **dadurch gekennzeichnet, dass** die Vorrichtung im ersten Zugangspunkt enthalten ist und aufweist:

- Einrichtungen zur Modellierung eines physikalischen Durchsatzes zwischen dem ersten Zugangspunkt und der Mobilstation bezüglich einer Empfangsleistung eines von einer Mobilstation gesendeten und vom ersten Zugangspunkt empfangenen Signals ausgehend von Empfangsleistungsmessungen von von der Mobilstation gesendeten und vom ersten Zugangspunkt empfangenen Signalen,
- Einrichtungen zur Bestimmung von Pegeln ausgehend von der Modellierung, wobei die Pegel ausgehend vom physikalischen Durchsatz zwischen dem ersten Zugangspunkt und der Mobilstation und der Empfangsleistung eines von einer Mobilstation gesendeten und vom ersten Zugangspunkt empfangenen Signals definiert werden,
- Einrichtungen für Messungen physikalischer Durchsätze zwischen dem ersten Zugangspunkt und der Mobilstation,
- Einrichtungen für Empfangsleistungsmessungen von von der Mobilstation gesendeten und vom ersten Zugangspunkt empfangenen Signalen,
- Einrichtungen zur Bestimmung eines Pegels, auf dem sich die Mobilstation befindet, ausgehend von den Messungen,
- Einrichtungen zur Überprüfung, ob der Pegel, auf dem sich die Mobilstation befindet, niedriger ist als einer der ausgehend von der Modellierung bestimmten Pegel, und wenn ja, Einrichtungen zur Aktivierung von:
- Einrichtungen für den Erhalt von Empfangsleistungsmessungen von von der Mobilstation gesendeten und vom ersten und vom zweiten Zugangspunkt empfangenen Signalen,
- Einrichtungen zur Berechnung eines Werts der Empfangsleistung eines von der Mobilstation gesendeten und vom ersten Zugangspunkt empfangenen Signals und einer Änderungsgeschwindigkeit der Empfangsleistung eines von der Mobilstation gesendeten und vom ersten Zugangspunkt empfangenen Signals ausgehend von den erhaltenen Messungen und der Modellierung,
- Einrichtungen zur Berechnung, ausgehend vom berechneten Wert der Empfangsleistung eines von der Mobilstation gesendeten und vom ersten Zugangspunkt empfangenen Signals und der Änderungsgeschwindigkeit der Empfangsleistung eines von der Mobilstation gesendeten und vom ersten Zugangspunkt empfangenen Signals, von Antizipationen eines physikalischen Durchsatzes zwischen jedem Zugangspunkt und der Mobilstation,
- Einrichtungen zur Bestimmung, ob eine Neuverbindung der Station zum zweiten Zugangspunkt unter anderen ausgehend von den berechneten Antizipationen ausgeführt werden muss.

9. Computerprogramm, das auf einem Informationsträger gespeichert ist, wobei das Programm Anweisungen aufweist, die es ermöglichen, das Verfahren nach einem der Ansprüche 1 bis 7 durchzuführen, wenn es von einem EDV-System geladen und ausgeführt wird.

10. Speichereinrichtungen, **dadurch gekennzeichnet, dass** sie ein Computerprogramm speichern, das Anweisungen zur Durchführung, durch eine Vorrichtung, des Verfahrens nach einem der Ansprüche 1 bis 7 enthalten, wenn das Programm von einem Prozessor der Vorrichtung ausgeführt wird.

**Claims**

1. Method for anticipating a reconnection, to a second access point, of a mobile station connected to a first access point, the access points forming a wireless telecommunication network, **characterised in that** the method comprises the steps, performed by the first access point, of:

   - modelling a physical bit rate between the first access point and the mobile station with respect to a reception power of a signal sent by a mobile station and received by the first access point on the basis of measurements of reception power of signals sent by the mobile station and received by the first access point,
   - determining levels from the modelling, the levels being defined from the physical bit rate between the first access point and the mobile station and the reception power of a signal sent by a mobile station and received by the first access point,
   - measuring physical bit rates between the first access point and the mobile station,
   - measuring reception powers of signals sent by the mobile station and received by the first access point,
   - determining a level in which the mobile station is situated from the measurements,
   - checking whether the level in which the mobile station is situated is below one of the levels determined from the modelling and, if so, the method further comprises the steps of:
   - obtaining measurements of reception power of signals sent by the mobile station and received by the first and second access points,
   - calculating a value of the reception power of a signal sent by the mobile station and received by the first access point and a rate of variation of the reception power of a signal sent by the mobile station and received by the first access point from the measurements obtained and from the modelling,
   - calculating, from the value of the reception power of a signal sent by the mobile station and received by the first access point and from the rate of variation of the reception power of a signal sent by the mobile station and received by the first access point that were calculated, anticipations of a physical bit rate between each access point and the mobile station,
   - determining whether a reconnection of the station to the second access point must be made among other things from the anticipations calculated.

2. Method according to claim 1, **characterised in that** the method further comprises a step of calculating a score for each access point and **in that** the determination whether a reconnection of the station to the second access point must be made is determined from the scores calculated.

3. Method according to claim 1 or 2, **characterised in that** the physical bit rates between each access point and the mobile station are physical bit rates received by the mobile station.

4. Method according to any one of claims 1 to 3, **characterised in that** the method further comprises a step of transferring, to the second access point, the modelling of the physical bit rate between the first access point and the mobile station with respect to the reception power of the signal sent by the mobile station and received by the first access point.

5. Method according to any one of claims 1 to 4, **characterised in that** the modelling is obtained from first, second and third affine straight lines, the director coefficient and the ordinate of the second affine straight line are determined for each mobile station from physical measurements of bit rate between the first access point and the mobile station with respect to a reception power of a signal sent by a mobile station and received by the first access point.

6. Method according to claim 5, **characterised in that** the director coefficient is determined from a mean of measurements, half of the measurements are above 50% of the maximum physical bit rate between the first access point and the mobile station and below 80% of the maximum physical bit rate between the first access point and the mobile station, the other half of the measurements are below 50% of the maximum physical bit rate between the first access point and the mobile station and above 20% of the maximum physical bit rate between the first access point and the mobile station.

7. Method according to claim 6, **characterised in that** the modelling is obtained by defining, around the affine straight lines, an area determined from a predetermined percentage of the maximum physical bit rate between the first access point and the mobile station.

8. Device for anticipating a reconnection, to a second access point, of a mobile station connected to a first access point, the access points forming a wireless telecommunication network, **characterised in that** the device is included in the first access point and comprises:

- means for modelling a physical bit rate between the first access point and the mobile station with respect to a reception power of a signal sent by a mobile station and received by the first access point on the basis of measurements of reception power of signals sent by the mobile station and received by the first access point,
- means for determining levels from the modelling, the levels being defined from the physical bit rate between the first access point and the mobile station and the reception power of a signal sent by a mobile station and received by the first access point,
- means for measuring physical bit rates between the first access point and the mobile station,
- means for measuring reception powers of signals sent by the mobile station and received by the first access point,
- means for determining a level in which the mobile station is situated from the measurements,
- means for checking whether the level in which the mobile station is situated is below one of the levels determined from the modelling and, if so, means for activating:
- means for obtaining measurements of reception power of signals sent by the mobile station and received by the first and second access points,
- means for calculating a value of the reception power of a signal sent by the mobile station and received by the first access point and of a rate of variation of the reception power of a signal sent by the mobile station and received by the first access point from the measurements obtained and from the modelling,
- means for calculating, from the value of the reception power of a signal sent by the mobile station and received by the first access point and from the rate of variation of the reception power of a signal sent by the mobile station and received by the first access point that were calculated, anticipations of a physical bit rate between each access point and the mobile station,
- means for determining whether a reconnection of the station to the second access point must be made among other things from the anticipations calculated.

9. Computer program stored on an information carrier, said program comprising instructions for implementing the method according to any one of claims 1 to 7 when it is loaded into and executed by a computer system.

10. Storage means, **characterised in that** they store a computer program comprising instructions for implementing, by a device, the method according to any one of claims 1 to 7 when said program is executed by a processor of said device.

Ap4

Ap1

Point
D'accès

Point
D'accès

Ap2

Point
D'accès

In

Internet

St1

Station

Ap3

Point
D'accès

## Fig. 1

Zone 1        25        Zone 2        Zone 3

100        C

20

A

B

D

0

10        100

## Fig. 2

Fig. 3

Fig. 4

EP 3 881 602 B1

E500 — Modélisation

E501 — Mesure RSSI PhyRate

E501bis — Ajustement de la modélisation

E502 — Détermination niveau

E503 — Niveau <4 ?

E504 — Mesure par chaque Point d'accès

E505 — Obtention $RSSI_n$, $VRSSI_n$

E506 — Calcul $RSSI_{n+1}$, $VRSSI_{n+1}$

E507 — Calcul score

E508 — Niveau <3 ?

E509 — Reconnexion AP meilleur score

E510 — Activation temporisation

Vers E501

Vers E501

Fig. 5

**EP 3 881 602 B1**

**RÉFÉRENCES CITÉES DANS LA DESCRIPTION**

**Documents brevets cités dans la description**

- KR 20150094936